(19) Europäisches Patentamt
European Patent Office
Office européen des brevets

(11) Publication number: **0 375 446 B1**

(12) # EUROPEAN PATENT SPECIFICATION

(45) Date of publication of patent specification: **15.06.94**

(51) Int. Cl.[5]: **C09J 109/10**, C09J 133/06, C08F 236/10, C08F 220/18

(21) Application number: **89313480.9**

(22) Date of filing: **21.12.89**

(54) **Adhesive composition.**

(30) Priority: **21.12.88 US 287421**

(43) Date of publication of application:
**27.06.90 Bulletin 90/26**

(45) Publication of the grant of the patent:
**15.06.94 Bulletin 94/24**

(84) Designated Contracting States:
**BE DE FR GB IT**

(56) References cited:
**EP-A- 0 065 603**
**EP-A- 0 180 434**
**EP-A- 0 251 726**
**US-A- 5 066 694**

(73) Proprietor: **EXXON RESEARCH AND ENGINEERING COMPANY**
**P.O.Box 390,**
**180 Park Avenue**
**Florham Park, New Jersey 07932-0390(US)**

(72) Inventor: **Agarwal, Pawan Kumar**
**580 Cobot Hill Road**
**Bridgewater New Jersey 08807(US)**
Inventor: **Pugel, Thomas Michael**
**RD 1, Box 176 N**
**Riegelsville Pennsylvania 18077(US)**

(74) Representative: **Fletcher Watts, Susan J. et al**
**ESSO Engineering (Europe) Ltd.**
**Patents & Licences**
**Mailpoint 72**
**Esso House**
**Ermyn Way**
**Leatherhead, Surrey KT22 8XE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

This invention relates to pressure sensitive adhesive compositions.

Conventional high strength adhesives commonly used in the pressure sensitive adhesive industry are prepared by solvent based techniques. For example, block copolymers based on polystyrene and isoprene, can be dissolved in a suitable solvent containing a hydrocarbon resin tackifier, which upon casting on a variety of substrates yield materials having outstanding adhesive properties. These materials can exhibit tack properties of 3 to 8·8 N/m (2-5 lbs. per inch) (180° peel test) and yet retain their tack under load over long periods of time. These properties are normally attributed to systems that display a combination of appropriate polymer modulus coupled with extremely high molecular weight of a suitable network that is induced in the resulting polymer system. These materials have achieved great prominence in the adhesive industry.

Despite the success of solvent based adhesives there is a current need by the adhesive industry to employ either hot melt or water based adhesive candidates. The reasons for the trend to water based PSA's is that the environmental and toxicity restrictions imposed by federal, state, and local governments markedly restrict the use of effective solvents. In addition, the low polymer content in such solvent based adhesives can present a financial liability, when employed on a large scale. As a result of these factors, it is highly desirable that PSA's having similar properties to those achievable from solvent based systems be obtained from water based systems. Unfortunately, there has not been a significant amount of success in achieving the PSA properties from a water based polymer system that can equal the properties that one needs from a solvent based PSA. The reasons for that deficiency of the properties of water based PSA's are several: A water based PSA based on a conventional hydrocarbon monomer provides a hydrophobic polymer system contained in an aqueous matrix. The fusion or drying of a water based PSA system with all its incumbent surfactants and other additives to stabilize the emulsions adversely affect the adhesive performance in such systems. Consequently, the commonly emulsified water based PSA's are deficient in their adhesive character and their long-term creep resistance (cohesive strength). An urgent need exists for materials which will fill this void.

A water based system should be easy in its flow characteristics during coating and fusion steps. It is desired from such adhesives that they be easier to handle, if needed to be transferred from one substrate to the other for transfer tape applications. In the past it has been common to employ organic solutions as a way of applying a coating of a polymer system which is designed to have good adhesive properties. As mentioned earlier, this practice is now under considerable pressure, due to the fact that the organic solvents must be evaporated from the coating giving rise to pollution.

Several U.S. Patents have described sulfonated polymers such as sulfonated Butyl and sulfonated EPDM in adhesive applications (e.g., U.S. 3,867,247 and U.S. 3,801,531). Moreover, previous inventions (e.g. U.S. 4,387,172) have described copolymers or isoprene or styrene and butadiene with a sulfonate monomer that gives rise to very stable emulsions at high solids content. The blending of these sulfonate copolymers with suitable resin emulsions followed by evaporation and fusion gives rise to clear, strong PSA candidates that can have good tack. These earlier inventions have shown that either aggressive tack or high cohesive strength can readily be achieved by these materials. However, until now, the combination of good tack and high cohesive strength in a single formulation has not been achievable. The reasons for the lack of success of achievement of the combination of these characteristics has not been apparent. The lack of tack combined with high cohesive strength however, does not preclude commercialization of such systems.

It has not been discovered that by suitably controlling the molecular weight of the sulfonate/isoprene copolymer and the level of sulfonate monomer and by incorporating a preferential polar plasterized such as zinc stearate, particularity in the form of an emulsion, adhesive system having a desired range of adhesive and cohesive properties are achieved.

Before describing the examples and results, it is important to distinguish the instant invention over those prior art systems. The former patent (U.S. 3,867,247) is directed at a sulfonated Butyl cement which is solvent based and is employed to laminate various substrates. It is important to note that the instant invention differs dramatically from that patent as follows:

(a) The instant invention is directed at sulfonated co- or terpolymers formed by a copolymerization process whereas most of the prior art deals with sulfonated Butyl rubber (e.g., U.S. 3,867,247) which was formed by sulfonation of the Butyl rubber.

(b) The present invention contains an emulsified preferential plasticizer capable of associating with the metal sulfonate groups and thereby reducing the melt flow viscosity of the resulting adhesive at fusion temperatures and thereby promotes the uniformity of the coating as well.

The polymers used in the present invention are chemically diiferent (due to plasticizer inter-actions) from those of the patents above giving rise to diiferent properties and compatibilities.

Previous patents by Agarwal et al. such as U.S. 4,483,960; 4,517,250; U.S. 4,387,172, 4,387,174 and U.S. 3,801,531, do not disclose water-based adhesive emulsions of the present invention.

EP-A-0 065 603 discloses hot melt adhesives based on a blend of a neutralised sulfonated co- or terpolymer and a tackifier resin. Optionally, a preferential plasticizer is included. Alter blending the (solid) adhesive mass can be extruded and/or calendered onto a substrate. Alternatively, it can be deposited by solvent casting from a solvent system.

EP-A- 0 251 726 refers to water based systems of mixtures of polymer emulsion and an emulsion of a tackifying resin. Optionally other additives such as stabilisers, antioxidants and viscosity modifiers may be added. It is further stated, without amplification, that plasticizers may also be added.

The present invention provides a pressure sensitive water-based adhesive emulsion system comprising:

(a) An emulsion of a metal or amine neutralized co- or terpolymer of at least one conjugated diene and styrene sulfonate, said co -or terpolymer (i) having 5 to 50 meq. of neutralized sulfonated groups per 100 grams and (ii) comprising at least 80% by weight of said conjugated diene(s); wherein the metal is selected from Groups IA, IIA, IB and IIB of the Periodic Table and the amine is of the formula:

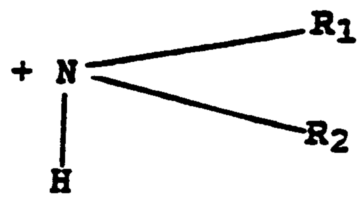

where $R_1$ and $R_2$ are aliphatic groups of $C_1$ to $C_{12}$ or hydrogen,

(b) 1 to 75 parts by weight (dry basis) of an emulsion of a preferential polar plasticizer per 100 parts by weight of the sulfonated co-or terpolymer, and

(c) 25 to 700 parts by weight (dry basis) of an emulsion of a hydrocarbon tackifying resin based on a petroleum or coal tar distillate per 100 parts by weight of said neutralized sulfonated elastomeric co- or terpolymer.

Especially suitable metal cations are sodium, potassium and zinc; preferably sodium.

In general, the conjugated diene and sulfonate containing monomer are dispersed in a water phase in the presence of a water soluble initiator or a redox system which has one component soluble in the oil phase and one component soluble in the water phase, and either with or without surfactant, wherein the temperature is sufficient to initiate polymerizsation. To the resultant latex is added a tackifier resin and the emulsion is doctor bladed onto a substrate and dried at room or elevated temperature to form the adhesive film.

The copolymers formed from the free radical emulsion copolymerization process can be generally described as having an Mn as measured by GPC of 5000 to 400,000, more preferably 10,000 to 200,000. The copolymers preferably contain 0.2 to 7 weight percent of the chemically combined sulfur, more preferably 0.3 to 6, and most preferably 0.5 to 5 weight percent sulfur. The copolymers are water insoluble, substantially gel free, thermally stable and oxidatively stable. Typical, but non-limiting examples of the copolymers which can be formed by the instant free radical emulsion copolymerization process are: butadiene/sodium styrene sulfonate copolymer, isoprene/sodium styrene sulfonate copolymer, butadiene/sodium vinyl sulfonate copolymer, isoprene/sodium vinyl sulfonate copolymer. Obviously, a large number of copolymers and even terpolymers can be formed by the instant free radical copolymerization process, and the term copolymer as used generally herein shall be understood to include terpolymers. Typically, the copolymerization of any conjugated diene as so defined herein can be readily copolymerized with any sulfonate containing monomer as is defined herein.

The conjugated dienes may be acyclic or cyclic, although are preferably acyclic, and preferably contain 4 to 12 carbon atoms, more preferably 4 to 10 carbon atoms, and most preferably 4 to 6 carbon atoms. Typical, but non-limiting examples of acyclic conjugated dienes are 1,3-butadiene, isoprene (2-methyl-1,3-butadiene), 2,3-dimethyl 1,3-pentadiene, 2-methyl-1,2-pentadiene, 2,3-dimethyl-1,3-pentadiene, 3-methyl-1,3-pentadiene, 2-phenyl butadiene, chloroprene and piperidene alkyl acrylates and methacrylates. Typical, but non-limiting examples of cyclic conjugated dienes are cyclopentadiene and methyl cyclopentadiene. The preferred conjugated dienes are selected from 1,3-butadiene, isoprene and chloroprene. In the formation of the sulfonate containing copolymer, one copolymerizes one of the aforementioned conjugated

dienes with the sulfonate containing monomer. Sulfonate containing terpolymers can be readily formed by copolymerizing the sulfonate containing monomer with a mixture of two of the above identified conjugated dienes.

An especially preferred sulfonate containing monomer is metal sulfonate styrene. The molar ratio of sulfonate containing monomer to conjugated diene is 1/200 to 1/5, more preferably 1/150 to 1/3, and most preferably 1/100 to 1/1. Either a water soluble, free radical initiator such as potassium persulfate, ammonium persulfate, water soluble redox couples such as potassium persulfate, sodium metabisulfite or oil soluble, water soluble redox couples such as diisopropyl benzene hydroperoxide, triethylenetetramine are effective in initiating these copolymerizations. The water soluble inorganic systems are preferred because of an apparent reduction of side reactions with the resulting unsaturated polymer.

The surfactants which may be employed for this invention are varied and well known in the art. The typical emulsifiers or surfactants can be employed, however, some are more effective than others in generating latexes of better stability. A preferred is sodium lauryl sulfate. This copolymerization can also be conducted without emulsifier because of the surfactancy of the sulfonate monomer.

Buffering agents can be employed in the instant polymerization process and are selected from the group consisting of sodium carbonate, ammonia, sodium acetate, trisodium phosphate etc. When utilized, these buffering agents are employed at a concentration of 0.1 to 5 grams/100 grams water employed in the emulsion system.

Chain transfer agents can be readily employed in the instant polymerization process for controlling the molecular weight of the resultant copolymer. The concentration of chain transfer agent is from 0 to 1.0 grams/100 grams of the combined weight of the sulfonate containing monomer and the conjugated diene.

The free radical emulsion copolymerization of the water soluble sulfonate containing polymer and the conjugated diene yields a stable latex, wherein the resultant water insoluble co or terpolymer is not covalently crosslinked and possesses substantial ionic crosslinking, and preferably has 0.2 to 7 weight percent of chemically combined sulfur, more preferably 0.3 to 6. To the resultant latex is added the tackifier resin to form the emulsion type adhesive composition.

To the emulsion of the metal neutralized sulfonated elastomeric co- or terpolymer is added a commercial tackifying resin preferably having a softening point of 0 to 160°C, more preferably 10 to 140°C and most preferably 20 to 120°C. A variety of commercial tackifier resins are available. The resins typically contain aliphatic dienes and monoolefins. Some of these resins contain and/or pinene base and/or pire base polyterpene resins as the main ingredient, while others are derived from the polymerization of petroleum or coal distillates which consist of aliphatic dienes, mono and diolefins and cyclic olefins having 5 to 6 carbon atoms. The latter type of tackifiers have primarily piperyline and/or isoprene structure. A general but excellent description of tackifying resins derived from petroleum derivatives can be found in, for example, Encyclopedia of Polymer Science and Technology, Vol. 9, pages 853 to 860, chapter by John Findlay, published by John Wiley & Sons NY (1968).

Typical but non-limiting tradenames of these commercial tackifiers are Wingtack of Goodyear, Escorez of Exxon, Piccolyte of Hercules and Zonarez of Arizona Chemicals. Recently, these and various other companies have also started marketing relatively higher softening point resins. These are generally modified aliphatic hydrocarbon resins and/or hydrogenated polycyclics. The physical appearance of these commercial tackifying resins varies, depending upon their softening point, they can be either viscous liquids or light-colored solids at room temperature. Most often, their initial color (Gardner) is 1.0 to 7.0 and the density from 0.7 to 1.0 gm/cm$^3$ at room temperature. The acid number of these resins is usually less than 1. In general, the molecular weight of these commercial tackifying resins is not homogeneous, the number average molecular weight Mn, as measured by GPC, can be from 300 to 5000, and more preferably 400 to 4000 and most preferably 500 to 2000.

As well-known to those familiar with the use of tackifying resins, because of their wide range compatibility, any of them can be used with sulfonated polymers in proper formulation, which will yield adhesive systems of varying physical characteristics. To cite an example in the present invention, the tackifying resins used are those based on hydrocarbon resins.

These hydrocarbon tackifier resins are incorporated as emulsions into the emulsion type adhesive composition at 25 to 700 parts by weight per 100 parts by weight of the metal neutralized sulfonated copolymer, more preferably 30 to 500, and most preferably 50 to 300.

In forming the emulsion type adhesive composition of the metal neutralized sulfonated elastomeric copolymer, generally first the preferential polar plasticizer such as zinc stearate in the form of an emulsion is added. The preparation of such an emulsion is disclosed in one of the following examples. The tackifying resin, in the form of an emulsion is added to this mixture of emulsions of metal neutralized sulfonated elastomeric copolymer and preferential plasticizer. Various tackifying resins in the emulsion form are now

commercially avaliable.

The preferential plasticizer is preferably selected from carboxylic acids having 5 to 30 carbon atoms, more preferably 8 to 22 carbon atoms, or basic salts of these carboxylic acids, wherein the metal ion of the basic salt is selected from the group consisting of aluminum, ammonium, lead and Groups IA, IIA, IB and IIB of the Periodic Table of Elements and mixtures thereof. The carboxylic acids are selected from lauric, myristic, palmitic, or stearic acids and mixtures thereof; e.g., zinc stearate, magnesium stearate or zinc laurate.

The preferential plasticizer is incorporated as an emulsion into the adhesive composition at 1 to 75 parts by weight based on 100 parts by weight of the copolymer, preferably 2 to 50, more preferably at 7 to 50, and most preferably at 10 to 30. Alternatively, other preferential plasticisers are selected from amines, amides such as stearamide, ammonium and amine salts of carboxylic acids and mixtures thereof.

The final emulsion product can be doctor bladed to the required thickness onto a substrate and the formed adhesive film is dried at room temperature or elevated temperature either under vacuum or at atmospheric pressure for a sufficient period of time in order to remove the water from the adhesive film.

A series of emulsion type adhesive composition were prepared. In the following examples, various final adhesive compositions and their properties ore described. In example 1, the synthesis procedure of an isoprene sodium styrene sulfonate copolymer is disclosed.

Example 1

Emulsion Copolymerization of Isoprene and Sodium-Styrene Sulfonate

In a 3·8 x $10^{-3}$ $m^3$ (one gallon) stainless steel pressure vessel the following ingredients were charged-isoprene 1020 gms and a blend of 1500 gm of distilled, deionized and dearated water with 90 grams of sodium styrene sulfonate, 68 grams of sodium lauryl sulfate and 24 gms of dodecylthiol. The vessel was closed and purged with dry nitrogen. Later the mixing was started and the reactor temperature was set at 45°C. To initiate the reaction, 3.75 gms of potassium persulfate dissolved in 50 ml was injected into the vessel.

After three hours reaction time, the reaction was stopped by discharging the reactor contents into a container which contained 1.5 gms of hydroquinone and 150 ml water. The emulsion in this example was identified as sample 163-A.

COPOLYMER WORK-UP

About half of the emulsion in 15.2 x $10^{-3}m^3$ (4.0 gallon) of methanol was precipitated. 285 grams of NaCL was dissolved in 1200 ml water and add it to the methanol-emulsion blend (to coagulate the emulsion). The blend was stirred with a large spatula and the coagulated copolymer was washed with water several times, to extract the NaCL. The polymer was blended in a "Waring Blender" in fresh methanol (containing 1.0 gram of BHT stabilizer), for one half minute at high speed. The polymer was vacuum filtered and dried in a vacuum oven for 24 hours at 250°C.
Total weight of copolymer: 750 grams (˜ 74% conversion)

| | | |
|---|---|---|
| Analytical results: | Sulfur:<br>Sodium: | 1.00 wt.%<br>0.40 wt.% |
| (0.40 wt.% sodium is equivalent to about 1.0 mole % NaSS in the copolymer). | | |

Example 2

Preparation of Emulsion of the Preferential Polar Plasticizing Zinc Stearate

The emulsion of preferential polar plasticizer such as zinc-stearate in water was prepared by the following technique. 5 to 7 gms of a commercial grade zinc stearate powder was added in a 250 ml. erlenmeyer flask containing short 150 ml. of deionized water. The contents were stirred in a magnetic stirrer and during stirring short 20 to 30 drops of one nonionic surfactant Igipal Co-630, were added dropwise. The stirring was continued overnight. It was found that if the stirring is stopped, after few hours some of the zinc-stearate or the stearic acid tend to settle; however not if it remains in the suspended form. It is

recommended that agitation should continue till use or the settled material be removed and proper solids contents of the emulsion be determined. In general, however, reasonably stable emulsions containing less than 10% solids can be obtained by this easy and straight forward manner.

Example 3

Preparation of Emulsion of Isoprene-sodium styrene sulfonate copolymer containing both the preferential plasticized emulsion and tackifying resins (Escorez 1310) emulsion

Adhesive blend emulsion compositions were prepared by mixing the appropriate quantities of emulsions of copolymers, the plasticized emulsion and resin emulsions. As an example in order to make an adhesive composition containing 50 parts of the copolymer, 40 parts of the resin and 5 parts of the plasticizer, the following quantities of the respective emulsions were used.

| | |
|---|---|
| copolymer emulsion | 60 ml. containing about 38.8% by weight the solids |
| Resin emulsion | 31 ml. containing about 60% by weight the solids |
| Plasticizer emulsion | 24 ml. containing about 5% by weight the solids |

The blend emulsion was agitated in order to ensure homogeneous mixing. Although it is not crucial the order in which these three ingredients are mixed, but it is preferred that copolymer and plasticizer emulsion are first mixed and followed by the resin emulsion. The resulting new stable emulsion was then evaluated as described in the following examples.

Examples 4 to 12

Desired quantities of emulsions prepared from the above techniques were cast on a 38·1 µm (1.5 mil) thick mylar film using an adhesive draw-down blade. Wet adhesive film thickness was experimental, determined such that the adhesive film when dried, was 25·4 to 38·1 µm (1.0-1.5) mil thick. The adhesive film was dried and the resin polymer and isoprene NaSS copolymer blend fused by exposure to various temperatures and time periods. Most often, however the drying conditions was 100°C for two minutes. Appropriate test specimens were then prepared and standard pressure sensitive adhesive tests were run. Illustrative data are shown in Table I.

TABLE (I)

PSA ADHESIVE COMPOSITIONS BASED ON ISOPRENE Na STYRENE SULFONATE COPOLYMERS - FORMULATED ADHESIVE PROPERTIES

| Example # | Composition | Film Thickness(1) (mils) | μm | Rolling Ball Tack, cm | 180° Peel Strength, (ppi) | N/m (x10²) | 90° Quick Stick, ppi | N/m (x10²) | Polyken Tack, gm | 178° Hold to Steel, hrs. |
|---|---|---|---|---|---|---|---|---|---|---|
| 4 | Copolymer/Resin (50/50)(2) | (1.0) | 25.4 | 18.8 | (1.8) | 2.8 | (0.8) | 1.4 | 414 | 1.1 |
| 5 | Copolymer/Plasticizer (95/5) | (0.8) | 20.3 | 30+ | (<0.05) | <0.09 | (0.15) | 0.26 | -- | -- |
| 6 | Copolymer/Plasticizer/Resin (50/5/50) | (1.0) | 25.4 | 30+ | (0.43) | 0.75 | (0.45) | 0.79 | 118 | 7.0 |
| 7 | Copolymer/Plasticizer (90/10) | (0.7-1.2) | 17.8-30.5 | 30+ | (<0.05) | <0.09 | (0.05) | 0.09 | -- | -- |
| 8 | Copolymer/Plasticizer/Resin (50/10/50) | (1.0) | 25.4 | 30+ | (0.9) | 1.6 | (0.45) | 0.79 | 210 | 0.4 |
| 9 | Copolymer/Plasticizer/Resin (40/10/50) | (0.3-1.0) | 7.6 | 30+ | (1.5) | 2.6 | (0.65) | 1.14 | 181 | 4.7 |
| 10 | Copolymer/Plasticizer/Resin (30/10/70) | (1.5) | 38.1 | 30+ | (T)3 | | (T)3 | | 146 | 42.7 |
| 11 | Copolymer/Plasticizer/Resin (60/5/40) | (0.5-1.0) | 12.7-25.4 | 30+ | (0.48) | 0.84 | (0.2) | 0.35 | 219 | 21.0 |
| 12 | Copolymer/Plasticizer/Resin (40/5/60) | (1.0) | 25.4 | 30+ | (2.1) | 3.7 | (T)3 | | 422 | 21.7 |

(1) Fusion temperature 100°C, time 2 minutes.
(2) Dry basis by weight (Resin - Escorez 1310 emulsion of Exxon Chemicals U.S.A.)
(3) T indicates tracking observed in the films - data not taken.

Example 13

It is clear from the data presented in Table I that there are significant differences in the various samples. Since in all adhesive blends a common tackifying resin Escorez-1310 and a common ISS

Copolymer was used, the differences can readily be attributed to the composition differences of the adhesive package directly resulting due to incorporation of the preferential plasticized emulsion. Note Example 4 does not contain the plasticizer while Examples 5 thru 12 contain the emulsified polar plasticizer. The difference in the adhesive properties are evident from the data presented in columns 2 thru 7 of Table I.

**Claims**

1. A pressure sensitive water-based adhesive emulsion system comprising:
   (a) An emulsion of a metal or amine neutralized co- or terpolymer of at least one conjugated diene and styrene sulfonate, said co-or terpolymer (i) having 5 to 50 meq. of neutralized sulfonated groups per 100 grams and (ii) comprising at least 80% by weight of said conjugated diene(s); wherein the metal is selected from Groups IA, IIA, IB and IIB of the Periodic Table and the amine is of the formula:

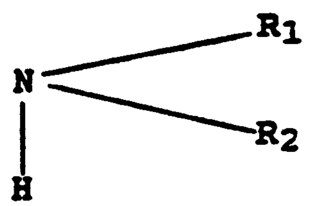

   where $R_1$ ad $R_2$ are aliphatic groups of $C_1$ to $C_{12}$ or hydrogen,
   (b) 1 to 75 parts by weight (dry basis) of a emulsion of a preferential polar plasticizer per 100 parts by weight of the sulfonated co-or terpolymer, and
   (c) 25 to 700 parts by weight (dry basis) of a emulsion of a hydrocarbon teckifying resin based on a petroleum or coal tar distillate per 100 parts by weight of said neutralized sulfonated elastemeric co- or terpolymer.

2. A pressure sensitive adhesive emulsion according to claim 1 wherein said conjugated diene has 4 to 12 carbon atoms.

3. A pressure sensitive adhesive emulsion according to claim 2, wherein said conjugated diene is isoprene.

4. A pressure sensitive adhesive emulsion according to my preceding claim, wherein said preferential polar plasticizer is selected from a fatty acid or a metal salt of a fatty acid, said fatty acid having 5 to 30 carbon atoms and said metal cation being selected from Groups IA, IIA, IB and IIB of the Periodic Table of Elements.

5. A pressure sensitive adhesive emulsion according to any preceding claim, wherein said sulfonate groups are neutralized with a said metal cation.

6. A pressure sensitive adhesive according to any of claims 1 to 5, wherein said emulsion has been deposited on a substrate in the form of a tacky adhesive layer.

7. A process for the preparation of the pressure sensitive adhesive emulsion claimed in any of preceding claims 1 - 5, comprising the steps of mixing the emulsion (a) with the emulsion (b) and thereafter adding emulsion (c) and homogenising.

**Patentansprüche**

1. Selbstklebendes Klebstoff-Emulsionssystem auf Wasserbasis, das
   (a) eine Emulsion eines mit Metall oder Amin neutralisierten Co- oder Terpolymers aus mindestens einem konjugierten Dien und Styrolsulfonat, wobei das Co- oder Terpolymer (i) 5 bis 50 mÄq neutralisierte sulfonierte Gruppen auf 100 g aufweist und (ii) mindestens 80 Gew.% des konjugierten

Diens/der konjugierten Diene umfaßt, wobei das Metall ausgewählt ist aus den Gruppen IA, IIA, IB und IIB des Periodensystems und das Amin die Formel

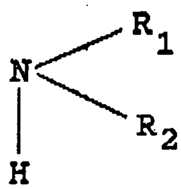

hat, in der $R_1$ und $R_2$ aliphatische Gruppen von $C_1$ bis $C_{12}$ oder Wasserstoff sind,

(b) 1 bis 75 Gewichtsteile (Trockenbasis) einer Emulsion eines vorzugsweise polaren Weichmachers auf 100 Teile des sulfonierten Co- oder Terpoymers, und

(c) 25 bis 700 Gewichtsteile (Trockenbasis) einer Emulsion eines Kohlenwasserstoffklebrigacherharzes auf Erdöl- oder Kohlenteerdestillatbasis auf 100 Gewichtsteile des neutralisierten sulfonierten elastomeren Co- oder Terpolymers umfaßt.

**2.** Selbstklebende Klebstoffemulsion nach Anspruch 2, bei der das konjugierte Dien 4 bis 12 Kohlenstoffatome aufweist.

**3.** Selbstklebende Klebstoffemulsion nach Anspruch 2, bei der das konjugierte Dien Isopren ist.

**4.** Selbstklebende Klebstoffemulsion nach einem der vorhergehenden Ansprüche, bei dem der vorzugsweise polare Weichmacher ausgewählt ist aus einer Fettsäure oder einem Metallsalz einer Fettsäure, wobei die Fettsäure 5 bis 30 Kohlenstoffatome aufweist und das Metallkation ausgewählt ist aus den Gruppe IA, IIA, IB und IIB das Periodensystems der Elemente.

**5.** Selbstklebende Klebstoffemulsion nach einem der vorherigen Ansprüche, bei der die Sulfonatgruppen mit dem Metallkation neutralisiert sind.

**6.** Selbstklebender Klobstoff nach einem der Ansprüche 1 bis 5, bei dem die Emulsion auf ein Substrat in Form einer klebrigen Klebstoffschicht aufgebracht worden ist.

**7.** Verfahren zur Herstellung der selbstklebenden Klebstoffemulsion gemäß einem der vorhergehenden Ansprüche 1 bis 5, bei dem die Emulsion (a) mit der Emulsion (b) gemischt wird und danach Emulsion (c) zugegeben und homogenisiert wird.

## Revendications

**1.** Système adhésif d'émulsion à base d'eau sensible à la pression comprenant:

(a) une émulsion d'un co- ou torpolymère neutralisé par un métal ou une amine d'au moins un diène conjugué et de styrène sulfonate, ledit co- ou terpolymère (i) ayant 5 à 50 még. de groupes sulfonés neutralisés par 100g et (ii) comprenant au moins 80% en poids du ou desdits diènes conjugués, dans laquelle le métal est choisi parmi les groupes IA, IIA, IB et IIB du Tableau Périodique et l'amine a pour formule:

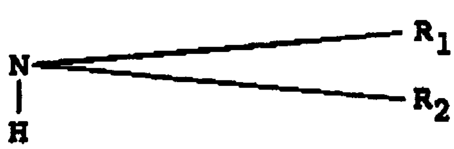

dans laquelle $R_1$ et $R_2$ sont des groupes aliphatiques en $C_1$-$C_{12}$ ou de l'hydrogène,

(b) 1 à 75 parties en poids (sur base sèche) d'une émulsion d'un plastifiant polaire préférentiel par 100 parties en poids du co- ou terpolymère sulfoné, et

(c) 25 à 700 parties en poids (sur base sèche) d'une émulsion d'une résine adhésive hydrocarbonée à base de distillat de pétrole ou de goudron de houille par 100 parties en poids dudit co- ou terpolymère élastomère sulfoné neutralisé.

**2.** Emulsion adhésive sensible à la pression selon la revendication 1, dans laquelle ledit diène conjugué a 4 à 12 atomes de carbone.

**3.** Emulsion adhésive sensible à la pression selon la revendication 2, dans laquelle ledit diène conjugué est l'isoprène.

**4.** Emulsion adhésive sensible à la pression selon l'une quelconque des revendications précédentes, dans laquelle ledit plastifiant polaire préférentiel est choisi parmi un acide gras ou un sel métallique d'acide gras, ledit acide gras ayant 5 à 30 atomes de carbone et ledit cation métallique étant choisi parmi les groupes IA, IIA, IB et IIB du Tableau Périodique des Eléments.

**5.** Emulsion adhésive sensible à la pression selon l'une quelconque des revendications précédentes, dans laquelle lesdits groupes sulfonates sont neutralisés par ledit cation métallique.

**6.** Emulsion adhésive sensible à la pression selon l'une quelconque des revendications 1 à 5, dans laquelle ladite émulsion a été déposée sur un substrat sous la forme d'une couche adhésive collante.

**7.** Procédé de préparation de l'émulsion adhésive sensible à la pression selon l'une quelconque des revendications 1 à 5, consistant à mélanger l'émulsion (a) à l'émulsion (b) et à ajouter ensuite l'émulsion (c) et à homogénéiser le tout.